# EUROPEAN PATENT APPLICATION

(11) **EP 4 329 010 A1**
(43) Date of publication of application: **28.02.2024**
(21) Application number: 22936889.9
(22) Date of filing: 14.04.2022
(51) Int. Cl.: H01M 4/505, H01M 10/0525

(54) **POSITIVE ELECTRODE ACTIVE MATERIAL, SECONDARY BATTERY, BATTERY MODULE, BATTERY PACK, AND ELECTRIC DEVICE**

(71) Applicant: Contemporary Amperex Technology Co., Limited, Ningde, Fujian 352100 (CN)
(72) Inventor: ZHANG, Zhenguo, Ningde, Fujian 352100 (CN); HU, Xingkai, Ningde, Fujian 352100 (CN); YIN, Xiang, Ningde, Fujian 352100 (CN); FAN, Jingpeng, Ningde, Fujian 352100 (CN); WANG, Sihui, Ningde, Fujian 352100 (CN); YAO, Zhijie, Ningde, Fujian 352100 (CN); LIU, Na, Ningde, Fujian 352100 (CN)
(74) Representative: Kraus & Lederer PartGmbB
(86) International application number: PCT/CN2022/086795
(87) International publication number: WO 2023/197240

(57) **Abstract**

A positive active material, a secondary battery, a battery module, a battery pack, and an electrical device are disclosed. The positive active material includes a spinel-type lithium-manganese-containing composite oxide with a molecular formula of Li₁₊ₓAₐM_{b}X_{c}Mn_{2-a-b-c-x}O₄₋ₜ. In the molecular formula: A is a doping element for a manganese site of the spinel-type lithium-manganese-containing composite oxide, and A includes one or more of V, Nb, Ta, Mo, W, Ru, Rh, Sn, Sb, Te, Tl, Pd, Bi, or Po; M is used for combining with O to form a second phase containing a polyoxyanion, and M includes one or more of B, C, N, Si, P, S, or Cl; X includes one or more of Mg, Al, Si, Ca, Sc, Ti, Cr, Fe, Co, Ni, Cu, Zn, or Zr; and the molecular formula satisfies: -0.1 ≤ x ≤ 0.3, 0 < a ≤ 0.2, 0 < b ≤ 0.2, 0 ≤ c ≤ 0.7, and 0 ≤ t ≤ 0.2. The positive active material doped with both A and M can improve both cycle storage performance and cycle life of the secondary battery under a high temperature.

## Description

### TECHNICAL FIELD

This application relates to the technical field of battery production, and in particular, to a positive active material, a secondary battery, a battery module, a battery pack, and an electrical device.

### BACKGROUND

With the advantages such as a small size, a high energy density, high safety, a low self-discharge rate, and a long lifespan, rechargeable batteries are widely used in many fields such as energy storage, communications, electric vehicles, and aerospace. A battery includes a plurality of secondary batteries connected in series, parallel, or series-and-parallel pattern. As an important part of a secondary battery, a positive active material provides lithium ions that shuttle between a positive electrode and a negative electrode during charging and discharging of the secondary battery. Therefore, the positive active material is vital to exertion of the performance of the battery.

A spinel-type lithium-manganese-containing composite oxide possesses a relatively high theoretical capacity, but exhibits relatively low cycle performance under a high temperature. The low cycle performance restricts the application of the spinel-type lithium-manganese-containing composite oxide. Therefore, how to enhance the high-temperature cycle performance of the secondary battery becomes an urgent technical problem to be solved.

### SUMMARY

In view of the problem above, an objective of this application is to provide a positive active material capable of improving cycle performance of a secondary battery, a secondary battery prepared from the positive active material, a battery module, a battery pack, and an electrical device.

To achieve the above objective, a first aspect of this application provides a positive active material. The positive active material includes a spinel-type lithium-manganese-containing composite oxide with a molecular formula of Li₁₊ₓAₐM_{b}X_{c}Mn_{2-a-b-c-x}O₄₋ₜ. In the molecular formula: A is a doping element for a manganese site of the spinel-type lithium-manganese-containing composite oxide, and A includes one or more of V, Nb, Ta, Mo, W, Ru, Rh, Sn, Sb, Te, Tl, Pd, Bi, or Po; M is used for combining with O to form a second phase containing a polyoxyanion, and M includes one or more of B, C, N, Si, P, S, or Cl; X includes one or more of Mg, Al, Si, Ca, Sc, Ti, Cr, Fe, Co, Ni, Cu, Zn, or Zr; and the molecular formula satisfies: -0.1 ≤ x ≤ 0.3, 0 < a ≤ 0.2, 0 < b ≤ 0.2, 0 ≤ c ≤ 0.7, and 0 ≤ t ≤ 0.2.

In this way, the positive active material in an embodiment of this application is doped with both A and M to stabilize the spinel structure and be enabled to capture hydrofluoric acid (HF) in an electrolyte. After the HF is captured, the positive active material can form a more stable oxyfluoride that contains elements A and M. That is, the elements A and M works synergistically to not only protect the structural stability of the positive active material but also protect the entire battery system, thereby improving the cycle storage performance and cycle life of the battery under high temperatures.

In some embodiments, A includes one or more of Nb, Ta, Mo, W, Ru, Te, or Tl.

In some embodiments, M includes one or more of Si, S, or Cl.

In some embodiments, X includes one or more of Al, Sc, Cr, Ni, Cu, Zn, or Ti; and/or c satisfies 0.1 ≤ c ≤ 0.6.

The element X in this embodiment of this application can increase an average valence state of manganese and a manganese-site element in the spinel structure, so that an average valence of manganese and the manganese-site element is greater than +3.5 during charging and discharging, thereby reducing the risks of Jahn-Teller distortion of the spinel structure, and in turn, improving the structural stability and capacity characteristics of the positive active material.

In some embodiments, the spinel-type lithium-manganese-containing composite oxide includes a first region and a second region distributed sequentially from a core of the composite oxide to an outer surface of the composite oxide. Based on a volume of the spinel-type lithium-manganese-containing composite oxide, a volume percent of the second region, denoted as p, is less than or equal to 50%. Based on a total mass of element A in the spinel-type lithium-manganese-containing composite oxide, a weight percent of the element A located in the second region is m. Based on a total mass of element M in the spinel-type lithium-manganese-containing composite oxide, a weight percent of the element M located in the second region is n, satisfying: m + n ≥ 70%; and optionally 10% ≤ p ≤ 30%, and/or 80% ≤ m + n ≤ 95%.

In this way, the element A and the element M in this embodiment of this application are richly concentrated in the second region. The synergy between the element A and the element M protects the superficial layer of the spinel-type lithium-manganese composite oxide more reliably, improves the structural stability of the superficial layer, and in turn, improves the overall structural stability of the positive active material, thereby promoting exertion of the capacity of the positive active material, and improving the cycle performance and cycle life of the secondary battery that contains the positive active material.

In some embodiments, the molecular formula satisfies: -0.1 ≤ x ≤ 0.3, and/or 0 ≤ t ≤ 0.2. In this way, the structure of the spinel-type lithium-manganese-containing composite oxide in this embodiment of this application is more stable, thereby promoting exertion of the capacity.

In some embodiments, the molecular formula satisfies: 0.001 ≤ a ≤ 0.1 and/or 0.001 ≤ b ≤ 0.1, and optionally 0.005 ≤ a + b ≤ 0.1.

In this way, when the element A and the element M in this embodiment of this application satisfy all of the foregoing ranges, the synergy can be exerted sufficiently between the element A and the element M to improve the structural stability of the positive active material, promote exertion of the capacity of the positive active material, and in turn, improve the cycle storage performance and cycle life of the positive active material under high temperatures.

In some embodiments, a specific surface area of the spinel lithium-manganese-containing composite oxide is 0.01 m²/g to 1.5 m²/g, and optionally 0.1 m²/g to 1 m²/g.

In this way, the specific surface area of the spinel-type lithium-manganese-containing composite oxide in this embodiment of this application is relatively small, thereby reducing the risk of side reactions on the surface, and improving the long-term cycle stability of the secondary battery that uses the spinel-type nickel-manganese-lithium-containing composite oxide as a positive active material. The surface of the spinel structure is easier to be fully covered and modified, thereby improving the overall structural stability of the spinel structure. In addition, the mass of a modification layer used for modifying the spinel structure is positively correlated with the specific surface area of the spinel structure. The thickness of the modification layer in this embodiment of this application can avoid being overly thick, thereby ensuring high kinetic performance of the spinel structure.

In some embodiments, an average particle diameter Dv₅₀ of the spinel-type lithium-manganese-containing composite oxide is 1 µm to 20 µm, and optionally 2 µm to 15 µm.

In this way, when the average particle diameter Dv₅₀ of the spinel-type lithium-manganese-containing composite oxide in this embodiment of this application falls within the above range, the crystal structure is relatively perfect, the grain surface is stable, the specific surface area is relatively small, and it is convenient to dope the second region of the spinel-type lithium-manganese-containing composite oxide during the preparation process. The amount of loss of the elements such as Li and O is small. In addition, the processability of the composite oxide is relatively high in a subsequent process, thereby enhancing the comprehensive performance of the material and the battery.

In some embodiments, a and b in the molecular formula and the average particle diameter Dv₅₀ of the spinel-type lithium-manganese-containing composite oxide satisfy: 0.01 ≤ (a + b) × Dv₅₀ ≤ 1.

In this way, in this embodiment of this application, the doping amount of both the element A and the element B as well as the average particle diameter Dv₅₀ of the spinel-type lithium-manganese-containing composite oxide are controlled to fall within an appropriate range, so as to achieve a good trade-off between the structural stability and the kinetic performance of the spinel-type lithium-manganese-containing composite oxide.

In some embodiments, the spinel-type lithium-manganese-containing composite oxide possesses a monocrystalline particle morphology or a quasi-monocrystalline particle morphology.

In this way, few grain boundaries exist inside the monocrystalline or quasi-monocrystalline particles, the probability of particle cracking is low during subsequent processing and service of the secondary battery, and the structure is stable, thereby improving the long-term stability of the secondary battery in use. In addition, the monocrystalline or quasi-monocrystalline particles are highly dispersible, thereby making it easy to implement uniform and comprehensive surface modification. By contrast, a large number of grain boundaries exist inside polycrystalline particles. During subsequent processing and use, the polycrystalline particles are prone to cracking at the grain boundaries. The cracked particles expose a new unmodified surface without a cathode electrolyte interface (CEI) film, thereby deteriorating battery performance.

In some embodiments, a grain shape of the spinel-type lithium-manganese-containing composite oxide is at least one of an octahedron, a truncated octahedron, or a regular polyhedron derived from a chamfered truncated octahedron.

In this way, on the grain surface of the spinel-type lithium-manganese-containing composite oxide, the crystal plane is more stable, and the surface is relatively small, thereby slowing down the side reactions on the surface and improving the structural stability of the positive active material.

A second aspect of this application provides a battery module. The battery module includes the secondary battery according to any one of the embodiments in the first aspect of this application.

A third aspect of this application provides a battery pack. The battery pack includes the battery module according to the second aspect of this application.

A fourth aspect of this application provides an electrical device. The electrical device includes at least one of the secondary battery according to any one of the embodiments in the first aspect of this application, the battery module according to the second aspect of this application, or the battery pack according to the third aspect of this application.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic diagram of a secondary battery according to an embodiment of this application;
FIG. 2 is an exploded view of a secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application;
FIG. 6 is a schematic diagram of an electrical device according to an embodiment of this application;
FIG. 7 is a schematic diagram of a positive active material particle divided into regions according to this application;
FIG. 8 shows a morphology of a positive active material prepared in Embodiment 52.

List of reference numerals:
1. secondary battery;
11. outer package; 111. top cap assembly; 112. housing; 12. electrode assembly; 121. first region; 122. second region;
10. battery module;
20. battery pack; 21. upper box; 22. lower box;
30. electrical device.

### DETAILED DESCRIPTION OF EMBODIMENTS

The following describes and discloses in detail some embodiments of a positive active material, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that a method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, any one of the following conditions satisfies the condition "A or B" : A is true (or existent) and B is false (or absent); A is false (or absent) and B is true (or existent); and, both A and B are true (or existent).

### [Positive active material]

A lithium-manganese-containing composite oxide (LMO) assumes a spinel structure. In this structure, oxygen atoms are arranged in a form of face-centered cubic stacking and occupy the 32e site in the lattice, and lithium atoms adopt a tetrahedral coordination geometry. The transition metal element manganese adopts an octahedral coordination geometry. The spinel structure provides a good channel for intercalation or deintercalation of lithium ions, and is conducive to charging and discharging of the secondary battery. In the description hereof, the lithium atom is located at the 8a site of the tetrahedron, and therefore, the 8a site of the tetrahedron is called a "lithium site"; and the manganese atom is located at the 16d site of the octahedron, and therefore, the 16d site of the octahedron is called a "manganese site".

There are many valence states of manganese compounds. In spinel lithium manganese oxide, the average valence state of manganese is +3.5 valence, and a part of manganese exists in the form of +3 valence. However, the trivalent manganese is unstable and prone to disproportionation reactions that generate divalent manganese and tetravalent manganese.

The applicant finds through research that, when the lithium-manganese-containing composite oxide (LMO) of a spinel structure is used as a positive active material of the secondary battery, side effects (depleting oxygen, generating hydrogen ions H⁺, dissolving out transition metal ions such as Mn²⁺) are prone to occur on the surface of the positive active material during the charging of the secondary battery, especially after the voltage is increased to a high voltage by charging. Particularly, the Mn²⁺ ions are dissolved in the electrolyte, thereby disrupting the structure of the positive active material, leading to instability of the material structure during cycling, and resulting in a decline in cycle performance. In addition, there may be a small amount of moisture in the electrolyte. The moisture reacts with the electrolyte salt in the electrolyte to generate hydrofluoric acid (HF). The HF further promotes the dissolution of manganese, thereby forming a vicious circle.

In addition, H⁺ diffuses to the negative electrode plate and is reduced to generate H². Mn²⁺ diffuses to the negative electrode plate to deposit, thereby reducing the ionic conductivity of a solid electrolyte interface (Solid Electrolyte Interface, SEI) film, and resulting in the hazards of gas-induced expansion of the secondary battery during high-temperature storage and cycling. In addition, this makes the capacity fade quickly, deteriorates the long-term stability of the secondary battery under high temperatures and high voltages, and in turn, shortens the service life of the secondary battery.

In view of this, in this application, the applicant adds a doping element such as element A, element M, and element X into the positive active material to modify the positive active material, with a view to improving the high-temperature storage performance and cycle performance of the secondary battery that adopts the positive active material.

The positive active material according to this application includes a spinel-type lithium-manganese-containing composite oxide with a molecular formula of Li₁₊ₓAₐM_{b}X_{c}Mn_{2-a-b-c-x}O₄₋ₜ. In the molecular formula: A is a doping element for a manganese site of the spinel-type lithium-manganese-containing composite oxide, and A includes one or more of V, Nb, Ta, Mo, W, Ru, Rh, Sn, Sb, Te, Tl, Pd, Bi, or Po; M is used for combining with O to form a second phase containing a polyoxyanion, and M includes one or more of B, C, N, Si, P, S, or Cl; X includes one or more of Mg, Al, Si, Ca, Sc, Ti, Cr, Fe, Co, Ni, Cu, Zn, or Zr; and the molecular formula satisfies: -0.1 ≤ x ≤ 0.3, 0 < a ≤ 0.2, 0 < b ≤ 0.2, 0 ≤ c ≤ 0.7, and 0 ≤ t ≤ 0.2.

The element A may include subgroup elements and/or main-group elements. As an example, the element A includes one or more of V, Nb, Ta, Mo, W, Ru, Rh, Sn, Sb, Te, Tl, Pd, Bi, or Po, and optionally, the element A includes one or more of Nb, Ta, Mo, W, Ru, Te, or Tl.

The element A can be added as a dopant into the spinel structure to primarily occupy the manganese site in place of some manganese ions. The element A can strongly interact with surrounding oxygen atoms to significantly stabilize the oxygen atoms, thereby reducing the side reactions (such as oxygen depletion) on the surface of the positive active material under a high voltage, and in turn, improving the structural stability of the positive active material.

The element M is configured to combine with the oxygen atom to form a second phase that contains polyoxoanions, and can absorb the hydrofluoric acid (HF) generated in the electrolyte under a high voltage. The generated fluorinated anions is relatively stable in the electrolyte. As an example, the element M includes one or more of B, C, N, Si, P, S, or Cl. Optionally, the element M includes one or more of Si, S, or Cl.

The positive active material in an embodiment of this application is doped with both A and M to stabilize the spinel structure and be enabled to capture hydrofluoric acid (HF) in an electrolyte. After the HF is captured, the positive active material can form a more stable oxyfluoride that contains elements A and M. That is, the elements A and M works synergistically to not only protect the structural stability of the positive active material but also protect the entire battery system, thereby improving the cycle storage performance and cycle life of the battery under high temperatures.

In some embodiments, the positive active material may be not doped with the element X. In this case, c is equal to 0, and the molecular formula of the spinel-type lithium-manganese-containing composite oxide is Li₁₊ₓAₐM_{b}Mn_{2-a-b-c-x}O₄₋ₜ. The synergy between the elements A and M improves the performance of the positive active material.

In some embodiments, the positive active material is further doped with the element X. In this case, c satisfies 0 < c ≤ 0.7, and optionally, 0.1 ≤ c ≤ 0.6. As an example, c may be 0.1, 0.2, 0.3, 0.4, 0.5, or 0.6.

X includes one or more of Mg, Al, Si, Ca, Sc, Ti, Cr, Fe, Co, Ni, Cu, Zn, or Zr. Optionally, X includes one or more of Al, Sc, Cr, Ni, Cu, Zn, or Ti.

The element X can increase an average valence state of manganese and a manganese-site element in the spinel structure, so that an average valence of manganese and the manganese-site element is greater than +3.5 during charging and discharging, thereby reducing the risks of Jahn-Teller distortion of the spinel structure, and in turn, improving the structural stability and capacity characteristics of the positive active material. In particular, when X includes one or more of Al, Sc, Cr, Ni, Cu, Zn, or Ti and when c satisfies 0.1 ≤ c ≤ 0.6, the element X can significantly improve the structural stability of the positive active material, and can work synergistically with the element M such as phosphorus (P) element to improve the performance of the positive active material.

In some embodiments, the spinel-type lithium-manganese-containing composite oxide includes a first region and a second region distributed sequentially from a core of the composite oxide to an outer surface of the composite oxide. Based on a volume of the spinel-type lithium-manganese-containing composite oxide, a volume percent of the second region, denoted as p, is less than or equal to 50%. Based on a total mass of element A in the spinel-type lithium-manganese-containing composite oxide, a weight percent of the element A located in the second region is m. Based on a total mass of element M in the spinel-type lithium-manganese-containing composite oxide, a weight percent of the element M located in the second region is n, satisfying: m + n ≥ 70%; and optionally 10% ≤ p ≤ 30%, and/or 80% ≤ m + n ≤ 95%.

Based on the volume percent, a positive active material particle is divided into a first region and a second region. The first region is a core part of the particle, and the second region is a part away from the core of the particle. However, the first region and the second region are continuous parts, and there is no obvious interface between the two regions. For merely ease of calculation, the positive active material particle is divided into different regions. The division does not limit the spinel structure of this application.

The volume percent of the second region, denoted as p, is less than or equal to 50%. Optionally, p satisfies 10% ≤ p ≤ 30%. For example, p may be 10%, 12%, 15%, 18%, 20%, 22%, 25%, 28%, or 30%. The volume percent of the second region is relatively low, indicating that the second region is mainly located in the outer superficial layer of the spinel structure.

Based on a total mass of element A in the spinel-type lithium-manganese-containing composite oxide, a weight percent of the element A located in the second region is m. Based on a total mass of element M in the spinel-type lithium-manganese-containing composite oxide, a weight percent of the element M located in the second region is n, satisfying: m + n ≥ 70%. Optionally, m and n satisfy 80% ≤ m + n ≤ 95%. As an example, m+n may be 70%, 75%, 80%, 85%, 88%, 90%, 92%, or 95%. As used herein, the weight percent of the element A located in the second region is a ratio of the mass of the element A located in the second region to the total mass of the element A in the spinel-type lithium-manganese-containing composite oxide. The weight percent of the element M located in the second region is a ratio of the mass of the element M located in the second region to the total mass of the element M in the spinel-type lithium-manganese-containing composite oxide.

The element A and the element M are richly concentrated in the second region. The synergy between the element A and the element M protects the superficial layer of the spinel-type lithium-manganese composite oxide more reliably, improves the structural stability of the superficial layer, and in turn, improves the overall structural stability of the positive active material, thereby promoting exertion of the capacity of the positive active material, and improving the cycle performance and cycle life of the secondary battery that contains the positive active material.

In some embodiments, x in the molecular formula satisfies -0.1 ≤ x ≤ 0.3. As an example, x may be -0.1, 0, 0.1, 0.15, 0.2, or 0.3. The x falling within such a range not only ensures enough Li, and in turn, ensures a high capacity, but also improves the kinetic performance and structural stability of the material, and also maintains a good spinel structure.

In some embodiments, the molecular formula satisfies 0 ≤ t ≤ 0.2. As an example, t may be 0, 0.01, 0.02, 0.03, 0.04, 0.05, 0.06, 0.07, 0.08, 0.09, 0.1, 0.15, 0.18, or 0.2. The value of t falling within the above range reduces oxygen defects in the structure of the positive active material, and in turn, reduces the hazards of side reactions on the surface of the positive active material.

In some embodiments, the molecular formula satisfies: -0.1 ≤ x ≤ 0.3 and 0 ≤ t ≤ 0.2. In addition, a weight ratio between lithium and oxygen is adjusted to fall within an appropriate range, so as to optimize the performance of the spinel-type lithium-manganese-containing composite oxide.

In some embodiments, the molecular formula satisfies 0.001 ≤ a ≤ 0.1. As an example, a may be 0.001, 0.002, 0.005, 0.008, 0.01, 0.02, 0.03, 0.04, 0.05, 0.06, 0.07, 0.08, 0.09, or 0.1. When the content of the element A falls within the above range, the improvement effect of substituting the element A into the manganese site is good.

In some embodiments, the molecular formula satisfies 0.001 ≤ b ≤ 0.1. As an example, b may be 0.001, 0.002, 0.005, 0.008, 0.01, 0.02, 0.03, 0.04, 0.05, 0.06, 0.07, 0.08, 0.09, or 0.1. When the content of the element M satisfies the above range, the polyoxoanion formed by M and oxygen can sufficiently absorb the hydrofluoric acid (HF) generated in the electrolyte, and generate fluorinated anions that are relatively stable in the electrolyte.

In some embodiments, the molecular formula satisfies: 0.001 ≤ a ≤ 0.1 and 0.001 ≤ b ≤ 0.1. When the element A and the element M satisfy all of the foregoing ranges, the synergy can be exerted sufficiently between the element A and the element M to improve the structural stability of the positive active material, promote exertion of the capacity of the positive active material, and in turn, improve the cycle storage performance and cycle life of the positive active material under high temperatures.

In some embodiments, the molecular formula satisfies 0.005 ≤ a + b ≤ 0.1. As an example, a+b may be 0.005, 0.006, 0.007, 0.008, 0.009, 0.01, 0.02, 0.03, 0.04, 0.05, 0.06, 0.07, 0.08, 0.09, or 0.1. When the element A and the element M satisfy all of the foregoing ranges, the synergy can be exerted sufficiently between the element A and the element M to improve the structural stability of the positive active material, promote exertion of the capacity of the positive active material, and in turn, improve the cycle storage performance and cycle life of the positive active material under high temperatures.

In some embodiments, the specific surface area of the spinel-type lithium-manganese-containing composite oxide is 0.01 m²/g to 1.5 m²/g, and optionally 0.1 m²/g to 1 m²/g. As an example, the specific surface area of the spinel-type lithium-manganese-containing composite oxide may be 0.01 m²/g, 0.05 m²/g, 0.1 m²/g, 0.12 m²/g, 0.15 m²/g, 0.2 m²/g, 0.3 m²/g, 0.4 m²/g, 0.5 m²/g, 0.6 m²/g, 0.7 m²/g, 0.8 m²/g, 0.9 m²/g, 1.0 m²/g, 1.2 m²/g, 1.4 m²/g, or 1.5 m²/g.

The specific surface area of the spinel-type lithium-manganese-containing composite oxide is relatively small, thereby reducing the risk of side reactions on the surface, and improving the long-term cycle stability of the secondary battery that uses the spinel-type nickel-manganese-lithium-containing composite oxide as a positive active material. In addition, the relatively small specific surface area is more conducive to uniform and comprehensive surface modification of the spinel material particles, thereby improving the overall structural stability of the spinel structure.

In some embodiments, an average particle diameter Dv₅₀ of the spinel-type lithium-manganese-containing composite oxide is 1 µm to 20 µm, and optionally 2 µm to 15 µm. As an example, Dv₅₀ may be 1 µm, 1.5 µm, 2 µm, 5 µm, 8 µm, 10 µm, 12 µm, 15 µm, 18 µm, or 20 µm.

When the average particle diameter Dv₅₀ of the spinel-type lithium-manganese-containing composite oxide in this embodiment of this application falls within the above range, the crystal structure is relatively perfect, the grain surface is stable, the specific surface area is relatively small, and it is convenient to dope the second region of the spinel-type lithium-manganese-containing composite oxide during the preparation process. In addition, the processability of the composite oxide is relatively high in a subsequent process. During the doping, the amount of loss of the elements such as Li and O in the spinel-type lithium-manganese-containing composite oxide is small, thereby enhancing the comprehensive performance of the material and the battery.

In some embodiments, a and b in the molecular formula as well as the average particle diameter Dv₅₀ of the spinel-type lithium-manganese-containing composite oxide satisfy 0.01 ≤ (a + b) × Dv₅₀ ≤ 1. As an example, (a + b) × Dv₅₀ may be 0.01, 0.02, 0.03, 0.05, 0.07, 0.08, 0.09, 0.1, 0.2, 0.3, 0.4, 0.5, 0.6, 0.7, 0.8, 0.9, or 1.

With the change in the content of the elements A and M and the change in the average particle diameter Dv₅₀, the performance of the spinel LMO active material changes in a similar way. Such three parameters work synergistically to further enhance the performance of the positive active material. For example, when the content of the elements A and M is relatively low, the improvement effect on the positive active material is not strong, and, if Dv₅₀ is also low, the improvement effect is further weakened. When the content of the elements A and M is relatively high, some performance indicators of the positive active material may be deteriorated, and, if Dv₅₀ is also high, such performance indicators of the positive active material may be further deteriorated. In this way, in this embodiment of this application, the doping amount of both the element A and the element M as well as the average particle diameter Dv50 of the spinel-type lithium-manganese-containing composite oxide are controlled to fall within an appropriate range, so as to achieve a good trade-off between the structural stability and the kinetic performance of the spinel-type lithium-manganese-containing composite oxide.

In some embodiments, the spinel-type lithium-manganese-containing composite oxide possesses a monocrystalline particle morphology or a quasi-monocrystalline particle morphology.

Few grain boundaries exist inside the positive active material particles that assume the foregoing morphology, the probability of particle cracking is low during subsequent processing and service of the secondary battery, and the structure is stable, thereby improving the long-term stability of the secondary battery in use. In addition, the monocrystalline or quasi-monocrystalline particles are highly dispersible, thereby making it easy to implement uniform and comprehensive surface modification. By contrast, a large number of grain boundaries exist inside polycrystalline particles. During subsequent processing and use, the polycrystalline particles are prone to cracking at the grain boundaries. The cracked particles expose a new unmodified surface without a cathode electrolyte interface (CEI) film, thereby deteriorating battery performance.

In some embodiments, a grain shape of the spinel-type lithium-manganese-containing composite oxide is at least one of an octahedron, a truncated octahedron, or a regular polyhedron derived from a chamfered truncated octahedron.

On the grain surface of the particles that assume the foregoing morphology, the crystal plane is more stable, and the surface is relatively small, thereby slowing down the side reactions on the surface and improving the structural stability of the positive active material.

### [Method for preparing a positive active material]

A method for preparing a positive active material according to this application may include the following steps:

Weighing out a lithium source, a manganese source, an A source, an M source, and an X source at a corresponding stoichiometric ratio of the target ingredients, and then mixing the ingredients well to obtain a mixture powder of the ingredients. The lithium source, manganese source, A source, M source, and X source may vary between each other, or a plurality of sources may be combined with each other. For example, the sources may be an oxide, hydroxide, carbonate or the like of at least one of lithium hydroxide, lithium carbonate, lithium nitrate, lithium oxalate, manganese oxide, nickel oxide, nickel manganese hydroxide, A, M, or X.

Heating the mixture powder to 800 °C to 1100 °C and keeping the temperature for 2 to 50 hours in an oxygen-containing atmosphere to obtain a positive active material.

In some embodiments, in order to reduce the t value, when the sintering temperature is higher than 900 °C, the temperature may be kept at 550 °C to 850 °C for 5 to 30 hours. Specifically, after high-temperature sintering, the temperature may be lowered to the above range and maintained. Alternatively, after high-temperature sintering, the temperature is lowered to a room temperature, and other treatments such as ball milling are performed, and then the temperature is raised to the above range and maintained.

### [Secondary battery]

This application further provides a secondary battery. The secondary battery includes a positive active material according to any one of the above embodiments, so that the performance indicators, especially the high-temperature full-charge storage performance, of the secondary battery keep stable under a high temperature and a high voltage in a long term. The secondary battery may be a lithium-ion secondary battery, a sodium-ion secondary battery, a lithium-sodium secondary battery, or the like.

The secondary battery may include a positive electrode plate, a negative electrode plate, an electrolyte, and a separator. During charging of the secondary battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### [Positive electrode plate]

The positive electrode plate includes a positive current collector and a positive film layer disposed on at least one surface of the positive current collector and containing a positive active material. As an example, the positive current collector includes two surfaces opposite to each other in a thickness direction of the positive current collector. The positive film is disposed on either or both of the two opposite surfaces of the positive current collector.

The positive current collector may be made of a material of high electrical conductivity and high mechanical strength. In some embodiments, the positive current collector may be an aluminum foil.

In the secondary battery according to this application, the positive active material on the positive electrode plate includes a spinel-type nickel-manganese-lithium-containing composite oxide with a molecular formula of Li₁₊ₓAₐM_{b}X_{c}Mn_{2-a-b-c-x}O₄₋ₜ. The spinel-type lithium-nickel-manganese-oxide composite oxide material is highly stable in structure, especially stable in the surface structure. When such a composite oxide is used as an active material of the positive electrode plate of the secondary battery, the performance of the battery system of the secondary battery under a high temperature and a high voltage can be enhanced significantly. For example, the gas-induced expansion is alleviated, the capacity fading is slowed down, and the performance indicators, especially the high-temperature full-charge storage performance, of the secondary battery keep stable under a high temperature and a high voltage in the long term, thereby significantly improving the service life and safety performance of the secondary battery.

In some embodiments, the positive active material not only includes the spinel-type nickel-manganese-lithium-containing composite oxide with a molecular formula of Li₁₊ₓAₐM_{b}X_{c}Mn_{2-a-b-c-x}O₄₋ₜ according to this application, but may also include another positive active material well known in the art for use in a battery. For example, other positive active materials may include at least one of the following materials: olivine-structured lithium-containing phosphate, lithium transition metal oxide, and a modified compound thereof. However, this application is not limited to such materials, and other conventional materials usable as a positive active material of a battery may be used instead. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811)), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive film further optionally includes a binder. The type of the binder is not particularly limited, and may be selected by a person skilled in the art according to actual needs. As an example, the binder for use in the positive film layer may include one or more of polyvinylidene difluoride (PVDF) or polytetrafluoroethylene (PTFE).

In some embodiments, the positive film layer further optionally includes a conductive agent. The type of the conductive agent is not particularly limited, and may be selected by a person skilled in the art according to practical needs. As an example, the conductive agent for use in the positive film layer may include one or more of graphite, superconductive carbon, acetylene black, carbon black, Ketjen black, carbon dots, carbon nanotubes, graphene, or carbon nanofibers.

In some embodiments, the steps of preparing a positive electrode plate from a positive active material may include: dispersing a positive active material, a binder, and optionally a conductive agent into a solvent, where the solvent may be N-methyl-pyrrolidone, and stirring the mixture well in a vacuum mixer to obtain a positive slurry; coating a positive current collector aluminum foil with the positive slurry evenly, air-drying the slurry at a room temperature, and then moving the current collector into an oven for drying, and performing cold calendering and slitting to obtain a positive electrode plate.

### [Negative electrode plate]

The negative electrode plate includes a negative current collector and a negative film disposed on at least one surface of the negative current collector. As an example, the negative current collector includes two surfaces opposite to each other in a thickness direction of the negative current collector. The negative film layer is disposed on either or both of the two opposite surfaces of the negative current collector.

The negative current collector may be made of a material of high electrical conductivity and high mechanical strength, and serve functions of conducting electrons and collecting current. In some embodiments, the negative current collector may be a copper foil.

The negative film layer includes a negative active material. The steps of preparing a negative electrode plate from the negative active material may include: dispersing a negative active material, a binder, and optionally a thickener and a conductive agent into a solvent such as deionized water to form a homogeneous negative slurry, coating a negative current collector with the negative slurry, and performing steps such as drying and cold calendering to obtain a negative electrode plate.

In some embodiments, the type of the negative active material is not particularly limited in this application, and the negative electrode plate optionally includes a negative active material suitable for use in a negative electrode of a secondary battery. The negative active material may be one or more of a graphite material (such as artificial graphite and natural graphite), mesocarbon microbeads (MCMB for short), hard carbon, soft carbon, a silicon-based material, or a tin-based material.

In some embodiments, the binder may be one or more selected from polyacrylic acid (PAA), polyacrylic acid sodium (PAAS), polyacrylamide (PAM), polyvinyl alcohol (PVA), styrene-butadiene rubber (SBR), sodium alginate (SA), polymethyl acrylic acid (PMAA), and carboxymethyl chitosan (CMCS).

In some embodiments, the thickener may be sodium carboxymethyl cellulose (CMC-Na).

In some embodiments, the conductive agent for use in the negative electrode plate may be one or more selected from graphite, superconductive carbon, acetylene black, carbon black, Ketjen black, carbon dots, carbon nanotubes, graphene, and carbon nanofibers.

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolytic solution. The electrolytic solution includes an electrolyte salt and a solvent.

In some embodiments, the electrolyte salt may be one or more of LiPF₆ (lithium hexafluorophosphate), LiBF₄ (lithium tetrafluoroborate), LiClO₄ (lithium perchlorate), LiAsF₆ (lithium hexafluoroarsenate), LiFSI (lithium bisfluorosulfonimide), LiTFSI (lithium bistrifluoromethanesulfonimide), LiTFS (lithium trifluoromethanesulfonate), LiDFOB (lithium difluoro(oxalato) borate), LiBOB (lithium bis(oxalato) borate), LiPO2F₂ (lithium difluorophosphate), LiDFOP (lithium difluoro(bisoxalato) phosphate), and LiTFOP (lithium tetrafluoro(oxalato) phosphate).

In some embodiments, the solvent may be one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and (ethylsulfonyl)ethane (ESE).

In some embodiments, the electrolytic solution further optionally includes an additive. For example, the additive may include a negative film-forming additive, a positive film-forming additive, and additives that can improve some performance of the battery, for example, an additive that improves overcharge performance of the battery, an additive that improves high-temperature performance of the battery, and an additive that improves lowtemperature performance of the battery, and the like.

### [Separator]

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

### [Outer package]

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

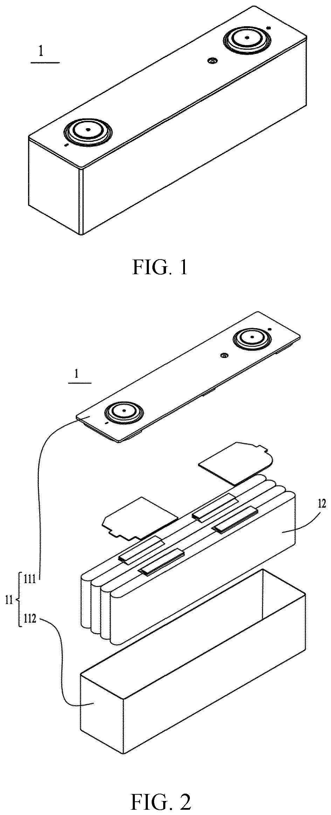

The shape of the secondary battery is not particularly limited in this application, and may be cylindrical, prismatic or any other shape. For example, FIG. 1 and FIG. 2 show a prismatic secondary battery 1 as an example.

In some embodiments, the secondary battery 1 may include an outer package 11. The outer package 11 includes a top cap assembly 111 and a housing 112. The positive electrode plate, the negative electrode plate, and the separator form an electrode assembly 12 accommodated in the housing 112. The housing 112 further contains an electrolytic solution. The positive electrode plate or the negative electrode plate includes a tab. During charging and discharging of the secondary battery 1, active ions are intercalated and deintercalated reciprocally between the positive electrode plate and the negative electrode plate. The electrolytic solution serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of active ions. Specifically, the secondary battery 1 may be a jelly-roll type or a stacked type battery, and may be but not limited to a lithium-ion battery or a sodium-ion battery.

Optionally, the housing 112 may include a bottom plate and a side plate connected to the bottom plate. The bottom plate and the side plate close in to form an accommodation cavity. An opening that communicates with the accommodation cavity is made on the housing 112. The cap assembly 111 can fit and cover the opening to close the accommodation cavity. The positive electrode plate, the negative electrode plate, and the separator may be made into the electrode assembly 12 by winding or stacking. The electrode assembly 12 is packaged in the accommodation cavity. The electrolytic solution infiltrates in the electrode assembly 12. The number of electrode assemblies 12 in a secondary battery 1 may be one or more, and may be selected by a person skilled in the art as actually required.

In some embodiments, the secondary battery 1 may be assembled to form a battery. The battery may be a battery module or a battery pack. For example, the battery module may include one or more secondary batteries 1, and the specific number of secondary batteries in a battery module may be selected by a person skilled in the art depending on practical applications and capacity of the battery module.

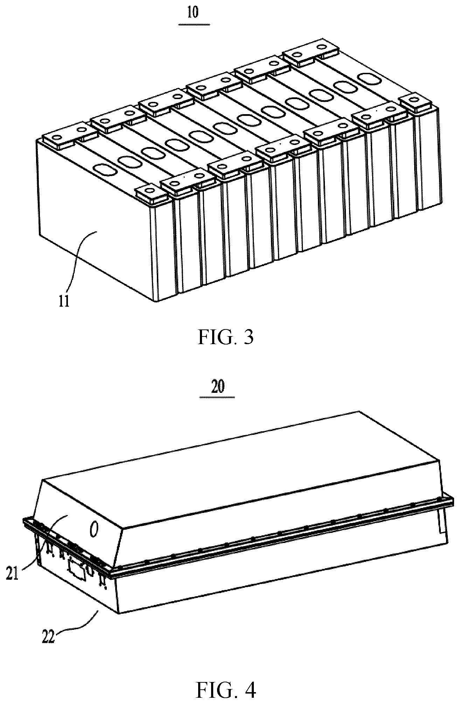

FIG. 3 shows a battery module 10 as an example. Referring to FIG. 3, in the battery module 10, a plurality of secondary batteries 1 may be arranged sequentially along a length direction of the battery module 10. Alternatively, the secondary batteries may be arranged in any other manner. Further, the plurality of secondary batteries 1 may be fixed by a fastener. Optionally, the battery module 10 may further include a shell that provides an accommodation space. The plurality of secondary batteries 1 are accommodated in the accommodation space.

In some embodiments, the battery module 10 may be assembled to form a battery pack. The battery pack may include one or more battery modules 10, and the specific number of battery modules in a battery pack may be selected by a person skilled in the art depending on practical applications and capacity of the battery pack. Alternatively, the battery pack may be directly formed of a plurality of secondary batteries 1.

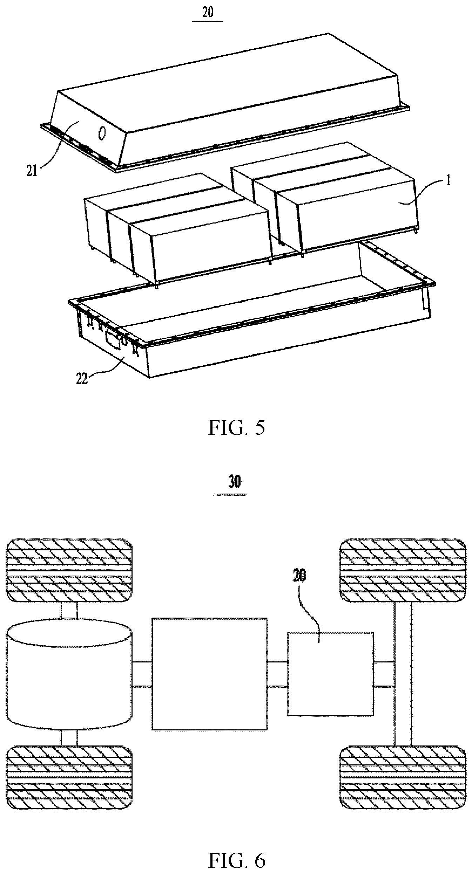

FIG. 4 and FIG. 5 show a battery pack 20 as an example. Referring to FIG. 4 and FIG. 5, the battery pack 20 may include a battery box and a plurality of battery modules 10 disposed in the battery box. The battery box includes an upper box 21 and a lower box 22. The upper box 21 fits the lower box 22 to form a closed space for accommodating the battery modules 10. The plurality of battery modules 10 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system. The secondary battery, the battery module, or the battery pack may be selected for use in the electrical device according to practical requirements of the electrical device.

FIG. 6 shows an electrical device 30 as an example. The electrical device 30 may be battery electric vehicle, a hybrid electric vehicle, a plug-in hybrid electric vehicle, or the like. The electrical device may adopt a battery pack or a battery module in order to meet the requirements of the electrical device 30 on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

### 1. Preparing a positive electrode plate

### 1.1 Preparing positive active material, where the doping elements in the positive active material are shown in Table 1 to Table 3.

Weighing out lithium carbonate, trimanganese tetroxide, an A source, an M source, and an X source at a stoichiometric ratio of ingredients set out in Table 1 to Table 3, and then mixing well to obtain a mixture powder of the ingredients. Heating the mixture powder in an air temperature to 900 °C, and keeping the temperature for 20 hours to obtain a positive active material.

### 1.2 Preparing a positive electrode plate

Using an 8 µm-thick aluminum foil as a positive current collector.

Mixing well the prepared positive active material, conductive carbon black, and polyvinylidene difluoride (PVDF) as a binder at a weight ratio of 95: 2: 3 in an appropriate amount of N-methyl-pyrrolidone (NMP) solvent to form a homogeneous positive slurry. Coating a surface of the positive current collector with the positive slurry, and performing steps such as drying to obtain a positive electrode plate.

### 2. Preparing a negative electrode plate

Stirring and mixing graphite as a negative active material, conductive carbon black, sodium carboxymethyl cellulose (CMC) as a thickener, styrene butadiene rubber (SBR) as a binder at a weight ratio of 96: 1: 1: 2 thoroughly in an appropriate amount of deionized water to form a homogeneous negative slurry, coating the negative current collector with the slurry, and performing steps such as drying to obtain a negative electrode plate.

### 3. Preparing an electrolytic solution

Mixing ethylene carbonate (EC), ethyl methyl carbonate (EMC), and diethyl carbonate (DEC) at a volume ratio of 1: 1: 1 to obtain an organic solvent, and then dissolving a well-dried lithium salt LiPF₆ in the mixed organic solvent to obtain an electrolytic solution in which the concentration of LiPF₆ is 1 mol/L.

### 4. Preparing a lithium-ion battery

Stacking the positive electrode plate, the separator (PP/PE/PP composite film), and the negative electrode plate in sequence, and then winding the stacked structure into an electrode assembly. Putting the electrode assembly into a packaging shell. Injecting the electrolytic solution into the electrode assembly, and then performing steps such as sealing, standing, hot and cold pressing, and chemical formation to obtain a lithium-ion battery.

### Embodiments 2 to 5

The type of the doping element A is the same as that in Embodiment 1, but the weight percent of the element A is different.

### Embodiments 6 to 11

The difference from Embodiment 1 lies in the type of the doping element A.

### Embodiments 12 to 15

The type of the doping element M is the same as that in Embodiment 1, but the weight percent of the element M is different.

### Embodiment 16

The type of the doping elements A and M is the same as that in Embodiment 1, but the weight percent of the elements A and M is different.

### Embodiments 17 to 21

The difference from Embodiment 12 lies in the type of the doping M source.

### Embodiments 22 to 31

The difference from Embodiment 12 is that an element X is added as a dopant; and the type of the doping element M in Embodiment 30 is different.

### Embodiments 32 to 41

The difference from Embodiment 12 is that the degree of rich concentration of the doping elements A and M in the second region is different.

### Embodiments 42 to 58

The differences from Embodiment 12 are: at least one of the element A or the element M is changed, and/or at least one of the particle size, the specific surface area, or the grain shape of the particles is changed by adjusting the sintering process.

### Comparative Embodiment 1

The difference from Embodiment 12 is that an element A is added as a dopant but no element M is added.

### Comparative Embodiment 2

The difference from Embodiment 12 is that an element M is added as a dopant but no element A is added.

### Comparative Embodiment 3

The difference from Embodiment 12 is that an element X is added as a dopant, but neither element A nor element M is added.

### Comparative Embodiment 4

The difference from Embodiment 12 is that none of elements A, M, or X is added as a dopant.

**Table 1 Content of elements in positive active materials prepared in Embodiments 1 to 30 and Comparative Embodiments 1 to 4**

| Serial number | Positive active material | | | | | | | |
|---|---|---|---|---|---|---|---|---|
| | Molecular formula | A | | M | | X | | a+b |
| | | Type | Conten t a | Typ e | Conten tb | Type | Conten tc | |
| Embodime nt 1 | Li_{1.00}Nb_{0.001}B_{0.001}Mn_{1.9 98}O₄ | Nb | 0 | B | 0 | / | 0 | 0 |
| Embodime nt 2 | Li_{1.00}Nb_{0.03}B_{0.001}Mn_{1.96 9}O₄ | Nb | 0.03 | B | 0 | / | 0 | 0.03 |
| Embodime nt 3 | Li_{1.00}Nb_{0.1}B_{0.001}Mn_{1.899} O₄ | Nb | 0.1 | B | 0 | / | 0 | 0.1 |
| Embodime nt 4 | Li_{1.00}Nb_{0.2}B_{0.001}Mn_{1.799} O₄ | Nb | 0.2 | B | 0 | / | 0 | 0.2 |
| Embodime nt 5 | Li_{1.00}Nb_{0.3}B_{0.001}Mn_{1.699} O4 | Nb | 0.3 | B | 0 | / | 0 | 0.3 |
| Embodime nt 6 | Li_{1.00}Rh_{0.03}B_{0.001}Mn_{1.96 9}O₄ | Rh | 0.03 | B | 0 | / | 0 | 0.03 |
| Embodime nt 7 | Li_{1.00}Sn_{0.03}B_{0.001}Mn_{1.969} O₄ | Sn | 0.03 | B | 0 | / | 0 | 0.03 |
| Embodime nt 8 | Li_{1.00}Ru_{0.03}B_{0.001}Mn_{1.96 9}O₄ | Ru | 0.03 | B | 0 | / | 0 | 0.03 |
| Embodime nt 9 | Li_{1.00}Ta_{0.03}B_{0.001}Mn_{1.969} O₄ | Ta | 0.03 | B | 0 | / | 0 | 0.03 |
| Embodime nt 10 | Li_{1.00}Mo_{0.03}B_{0.001}Mn_{1.96 9}O₄ | Mo | 0.03 | B | 0 | / | 0 | 0.03 |
| Embodime nt 11 | Li_{1.00}W_{0.03}B_{0.001}Mn_{1.969} O₄ | W | 0.03 | B | 0 | / | 0 | 0.03 |
| Embodime nt 12 | Li_{1.00}Nb_{0.03}B_{0.03}Mn_{1.94} O₄ | Nb | 0.03 | B | 0.03 | / | 0 | 0.06 |
| Embodime nt 13 | Li_{1.00}Nb_{0.03}B_{0.1}Mn_{1.87}O 4 | Nb | 0.03 | B | 0.1 | / | 0 | 0.13 |
| Embodime nt 14 | Li_{1.00}Nb_{0.03}B_{0.2}Mn_{1.77}O 4 | Nb | 0.03 | B | 0.2 | / | 0 | 0.23 |
| Embodime nt 15 | Li_{1.00}Nb_{0.03}B_{0.3}Mn_{1.67}O 4 | Nb | 0.03 | B | 0.3 | / | 0 | 0.33 |
| Embodime nt 16 | Li_{1.00}Nb_{0.05}B_{0.05}Mn_{1.90} O₄ | Nb | 0.05 | B | 0.05 | / | 0 | 0.1 |
| Embodime nt 17 | Li_{1.00}Nb_{0.03}C_{0.03}Mn_{1.94} O₄ | Nb | 0.03 | C | 0.03 | / | 0 | 0.06 |
| Embodime nt 18 | Li_{1.00}Nb_{0.03}P_{0.03}Mn_{1.94} O₄ | Nb | 0.03 | P | 0.03 | / | 0 | 0.06 |
| Embodime nt 19 | Li_{1.00}Nb_{0.03}Si_{0.03}Mn_{1.94} O4 | Nb | 0.03 | Si | 0.03 | / | 0 | 0.06 |
| Embodime nt 20 | Li_{1.00}Nb_{0.03}S_{0.03}Mn_{1.94} O₄ | Nb | 0.03 | S | 0.03 | / | 0 | 0.06 |
| Embodime nt 21 | Li_{1.00}Nb_{0.03}Cl_{0.03}Mn_{1.94} O4 | Nb | 0.03 | Cl | 0.03 | / | 0 | 0.06 |
| Embodime nt 22 | Li_{1.00}Nb_{0.03}B_{0.03}Mg_{0.01} Mn_{1.93}O₄ | Nb | 0.03 | B | 0.03 | Mg | 0.01 | 0.06 |
| Embodime nt 23 | Li_{1.00}Nb_{0.03}B_{0.03}Mg_{0.05} Mn_{1.89}O₄ | Nb | 0.03 | B | 0.03 | Mg | 0.05 | 0.06 |
| Embodime nt 24 | Li_{1.00}Nb_{0.03}B_{0.03}Mg_{0.2} Mn_{1.74}O₄ | Nb | 0.03 | B | 0.03 | Mg | 0.2 | 0.06 |
| Embodime nt 25 | Li_{1.00}Nb_{0.03}B_{0.03}Zr_{0.05}M n_{1.89}O₄ | Nb | 0.03 | B | 0.03 | Zr | 0.05 | 0.06 |
| Embodime nt 26 | Li_{1.00}Nb_{0.03}B_{0.03}Al_{0.1}M n_{1.84}O₄ | Nb | 0.03 | B | 0.03 | Al | 0.1 | 0.06 |
| Embodime nt 27 | Li_{1.00}Nb_{0.03}B_{0.03}Al_{0.3}M n_{1.64}O₄ | Nb | 0.03 | B | 0.03 | Al | 0.3 | 0.06 |
| Embodime nt 28 | Li_{1.00}Nb_{0.03}B_{0.03}Sc_{0.3}M n_{1.64}O₄ | Nb | 0.03 | B | 0.03 | Sc | 0.3 | 0.06 |
| Embodime nt 29 | Li_{1.00}Nb_{0.03}B_{0.03}Cr_{0.3}M n_{1.64}O₄ | Nb | 0.03 | B | 0.03 | Cr | 0.3 | 0.06 |
| Embodime nt 30 | Li_{1.00}Nb_{0.03}P_{0.03}Al_{0.3}M n_{1.64}O₄ | Nb | 0.03 | P | 0.03 | Al | 0.3 | 0.06 |
| Embodime nt 31 | Li_{1.00}Nb_{0.03}B_{0.03}Al_{0.7}M n_{1.24}O₄ | Nb | 0.03 | B | 0.03 | Al | 0.7 | 0.06 |
| Comparativ e Embodime nt 1 | Li_{1.00}Nb_{0.03}Mn_{1.97}O₄ | Nb | 0.03 | / | / | / | / | / |
| Comparativ e Embodime nt 2 | Li_{1.00}B_{0.03}Mn_{1.97}O₄ | / | / | B | 0.03 | / | / | / |
| Comparativ e Embodime nt 3 | Li_{1.00}Al_{0.3}Mn_{1.70}O₄ | / | / | / | / | Al | 0.3 | / |
| Comparativ e Embodime nt 4 | Li_{1.00}Mn_{2.00}O₄ | / | / | / | / | / | / | / |

In Table 1, the element A comes from an oxide containing the element A (an A source). For example, the element A is Nb, and the A source may be Nb₂O₅. The element M comes from an oxide containing the element M (an M source). For example, the element M is B, and the M source may be B₂O₃. The element X comes from an oxide containing the element X (an X source). For example, the element X is Mg, and the X source may be MgO.

**Table 2 Distribution of elements in positive active materials prepared in Embodiment 12 and Embodiments 31 to 40**

| Serial number | Positive active material | | | | |
|---|---|---|---|---|---|
| | Molecular formula | Distribution of doping elements A and M | | | |
| | | Volume percent of second region (p) | m = mass of element A in second region/total mass of element A | n = mass of element M in second region/total mass of element M | m+n |
| Embodiment 12 | Li_{1.00}Nb_{0.03}B_{0.03}Mn_{1.94}O₄ | 50% | 50 | 40 | 90 |
| Embodiment 32 | Li_{1.00}Nb_{0.03}B_{0.03}Mn_{1.94}O₄ | 40% | 50 | 40 | 90 |
| Embodiment 33 | Li_{1.00}Nb_{0.03}B_{0.03}Mn_{1.94}O₄ | 30% | 50 | 40 | 90 |
| Embodiment 34 | Li_{1.00}Nb_{0.03}B_{0.03}Mn_{1.94}O₄ | 20% | 50 | 40 | 90 |
| Embodiment 35 | Li_{1.00}Nb_{0.03}B_{0.03}Mn_{1.94}O₄ | 10% | 50 | 40 | 90 |
| Embodiment 36 | Li_{1.00}Nb_{0.03}B_{0.03}Mn_{1.94}O₄ | 5% | 50 | 40 | 90 |
| Embodiment 37 | Li_{1.00}Nb_{0.03}B_{0.03}Mn_{1.94}O₄ | 20% | 55 | 40 | 95 |
| Embodiment 38 | Li_{1.00}Nb_{0.03}B_{0.03}Mn_{1.94}O₄ | 20% | 45 | 35 | 80 |
| Embodiment 39 | Li_{1.00}Nb_{0.03}B_{0.03}Mn_{1.94}O₄ | 20% | 40 | 35 | 75 |
| Embodiment 40 | Li_{1.00}Nb_{0.03}B_{0.03}Mn_{1.94}O₄ | 20% | 40 | 30 | 70 |
| Embodiment 41 | Li_{1.00}Nb_{0.03}B_{0.03}Mn_{1.94}O₄ | 20% | 35 | 25 | 60 |

In Table 2, the element A comes from an oxide containing the element A (an A source). For example, the element A is Nb, and the A source may be Nb₂O₅. The element M comes from an oxide containing the element M (an M source). For example, the element M is B, and the M source may be B₂O₃.

**Table 3 Physical and chemical indicators of positive active materials prepared in Embodiment 12 and Embodiments 41 to 57**

| Serial number | Positive active material | | | | | | | | | |
|---|---|---|---|---|---|---|---|---|---|---|
| | Molecular formula | Hightemperatu re sintering temperatu re (°C) | Physical and chemical indicators | | | | | | a + b | R = (a+b ) × Dv₅ 0 |
| | | | a | b | Particle type | Dv5 (µm) | BET (m²/g ) | Grain shape | | |
| Embodi ment 42 | Li_{1.00}Nb_{0.03}B_{0 .03}Mn_{1.92}O₄ | 800 | 0.03 | 0. 03 | Quasimonocrystal line | 0.7 | 2.37 | Irreg ular | 0.06 | 0.04 |
| Embodi ment 43 | Li_{1.00}Nb_{0.03}B_{0 .03}Mn_{1.92}O₄ | 850 | 0.03 | 0.03 | Quasimonocrystal line | 1.5 | 1.68 | Octa hedro n | 0.06 | 0.09 |
| Embodi ment 44 | Li_{1.00}Nb_{0.03}B_{0 .03}Mn_{1.92}O₄ | 880 | 0.03 | 0.03 | Quasimonocrystal line | 2.1 | 1.42 | Octa hedro n | 0.06 | 0.13 |
| Embodi ment 45 | Li_{1.00}Nb_{0.03}B_{0 .03}Mn_{1.92}O₄ | 950 | 0.03 | 0.03 | Monocrystal line | 5.6 | 0.51 | Octa hedro n | 0.06 | 0.34 |
| Embodi ment 46 | Li_{1.00}Nb_{0.03}B_{0 .03}Mn_{1.92}O₄ | 980 | 0.03 | 0.03 | Monocrystal line | 10.9 | 0.27 | Trun cated octah edron | 0.06 | 0.6 5 |
| Embodi ment 47 | Li_{1.00}Nb_{0.03}B_{0 .03}Mn_{1.92}O₄ | 1000 | 0.03 | 0.03 | Monocrystal line | 14.4 | 0.13 | Trun cated octah edron | 0.0.6 | 0.86 |
| Embodi ment 48 | Li_{1.00}Nb_{0.03}B_{0.03}Mn_{1.92}O₄ | 1100 | 0.03 | 0.03 | Monocrystal line | 19.3 | 0.09 | Cha mfer ed trunc ated octah edron | 0. 06 | 1.16 |
| Embodi ment 49 | Li_{1.00}Nb_{0.03}B_{0 .03}Mn_{1.92}O₄ | 1200 | 0.03 | 0.03 | Monocrystal line | 25.1 | 0.06 | Cha mfer ed trunc ated octah edron | 0.06 | 1.51 |
| Embodi ment 50 | Li_{1.00}Nb_{0.03}B_{0 .03}Mn_{1.92}O₄ | 1250 | 0.03 | 0.03 | Polycrystalli ne | 30.2 | 0.01 | Quas i-spher ical | 0.06 | 1.81 |
| Embodi ment 51 | Li_{1.00}Nb_{0.03}B_{0 .03}Mn_{1.92}O₄ | 970 | 0.03 | 0.03 | Quasimonocrystal line | 8.9 | 0.98 | (Trun cated ) octah edron | 0.06 | 0.53 |
| Embodi ment 12 | Li_{1.00}Nb_{0.03}B_{0 .03}Mn_{1.92}O₄ | 900 | 0.03 | 0.03 | Quasimonocrystal line | 2.3 | 1.69 | Irreg ular | 0.06 | 0.14 |
| Embodi ment 52 | Li_{1.00}Nb_{0.003}B _{0.003}Mn_{1.996}O₄ | 850 | 0.003 | 0.003 | Quasimonocrystal line | 1.4 | 1.63 | Octa hedro n | 0.01 | 0.01 |
| Embodi ment 53 | Li_{1.00}Nb_{0.01}B_{0 .01}Mn_{1.99}O₄ | 850 | 0.01 | 0.01 | Quasimonocrystal line | 1.4 | 1.53 | Octa hedron | 0.02 | 0.03 |
| Embodi ment 54 | Li_{1.00}Nb_{0.03}B_{0 .1}Mn_{1.90}O₄ | 850 | 0.03 | 0.1 | Quasimonocrystal line | 1.4 | 1.49 | Octa hedron | 0.13 | 0.18 |
| Embodi ment 55 | Li_{1.00}Nb_{0.04}B_{0 .05}Mn_{1.91}O₄ | 1000 | 0.04 | 0.05 | Quasimonocrystal line | 13.8 | 0.18 | Octa hedron | 0.09 | 1.24 |
| Embodi ment 56 | Li_{1.00}Ta_{0.02}Si_{0 .02}Mn_{1.96}O₄ | 960 | 0.02 | 0.02 | Monocrystal line | 6.3 | 0.41 | Octa hedron | 0.04 | 0.25 |
| Embodi ment 57 | Li_{1.00}Ru_{0.002}S _{0.01}Mn_{1.988}O₄ | 960 | 0.002 | 0.01 | Monocrystal line | 7.1 | 0.39 | Trun cated octah edron | 0.01 | 0.09 |
| Embodi ment 58 | Li_{1.00}Ta_{0.01}Ru _{0.002}P_{0.01}-Si_{0.005}S_{0.005}-Mn_{1.968}O₄ | 960 | 0.01 2 | 0.02 | Monocrystal line | 8.4 | 0.33 | Cha mfer ed trunc ated octah edron | 0.03 | 0.27 |

In Table 3, the element A comes from an oxide containing the element A (an A source). For example, the element A is Nb, and the A source may be Nb₂O₅. The element M comes from an oxide containing the element M (an M source). For example, the element M is B, and the M source may be B₂O₃.

### Performance Test

### 1. Testing the initial discharge gram capacity of spinel LMO in a secondary battery

Using the prepared secondary battery as a test object.

Charging the secondary battery at a constant current of 0.3 C under 25 °C until voltage reaches an upper limit cut-off voltage Vₘₐₓ (Vₘₐₓ of the conventional spinel LMO and the slightly doped spinel LMO is equal to 4.3 V), and then charging the battery at a constant voltage of Vₘₐₓ until the current reaches 0.05 C. Leaving the secondary battery to stand for 5 minutes, and discharging the battery at a constant current of 0.33 C until the voltage reaches a lower-limit cut-off voltage Vₘᵢₙ (Vₘᵢₙ of the conventional spinel LMO and the slightly doped spinel LMO is equal to 2.5 V). Dividing this discharge capacity by the mass of the spinel LMO positive active material to obtain an initial discharge gram capacity C₀ (mAh/g) of the spinel LMO in the secondary battery.

As a fundamental performance parameter of the positive active material, the initial discharge gram capacity is limited in the use value when the gram capacity C₀ of the spinel LMO is less than a standard value of 100 mAh/g.

### 2. Testing the high-temperature full-charge storage performance of the secondary battery

Using the prepared secondary battery as a test object.

Charging the secondary battery at a constant current of 0.3 C under a 25 °C temperature until an upper-limit voltage Vₘₐₓ, and then charging the battery at a constant voltage of Vₘₐₓ until the current reaches 0.05 C. Subsequently, putting the secondary battery in a 45 °C environment, and, at intervals of 1 month, fully discharging the battery and then performing a full-charge full-discharge cycle under 25 °C, recording the discharge capacity value Cₙ, and then fully charging the battery again, and continuing to store the battery in a 45 °C environment until the discharge capacity Cₙ fades to 80% of the initial value C₀, and then stopping storing the battery. The total storage time of the battery under 45 °C after the full charge is a high-temperature full-charge storage time tₛ (months, m).

### 3. Testing the high-temperature cycle performance of the secondary battery

Using the prepared secondary battery as a test object.

Charging the secondary battery at a constant current of 0.3 C under a temperature of 45 °C until an upper-limit voltage Vₘₐₓ, and then charging the battery at a constant voltage of Vₘₐₓ until the current reaches 0.05 C. Leaving the battery to stand for 5 minutes, and then discharging the battery at a constant current of 0.33 C until the voltage reaches Vₘᵢₙ, thereby completing charge-and-discharge cycle. The discharge capacity at this time is a first-cycle discharge capacity. Repeating the foregoing steps to test the full battery until the reversible discharge capacity fades to 80% of the initial value. Recording the remaining reversible discharge capacity and the total number of cycles t_{c} (× 10 cycles, 10 cls).

This application comprehensively considers the capacity, storage performance, and cycle performance of the secondary battery. Therefore, it is defined that an overall electrical performance evaluation coefficient E of the secondary battery satisfies: E = (C₀/100) × (tₛ/36 + t_{c}/100).

Using a vehicle as an example of the electrical device, the in-vehicle performance of the secondary battery is measured by an endurance mileage and a total mileage of the vehicle. The endurance mileage may be measured by an initial capacity. The total mileage is a product of the endurance mileage per unit life time and a total life. The total life may be measured by a sum of the cycle life and the storage life. The numerals in the above formula represent the overall performance value and an applicability reference value of the spinel LMO respectively. In (C₀/100), 100 means that the initial capacity is 100 mAh/g, and 36 means that the high-temperature full-charge storage life is 3 years. In t_{c}/100, 100 means that the battery completes 1000 charge-and-discharge cycles under a high temperature. Obviously, according the applicability reference value of the performance indicator, E is equal to 2.

### 4. Testing the content of the elements in the positive active material

Measuring the content of each element in the positive active material with reference to the standard EPA 6010D-2014 *Inductively Coupled Plasma Atomic Emission Spectrometry (ICP-AES).*

### 5. Testing the average particle diameter Dv₅₀ (volume median diameter Dv₅₀)of the positive active material

Measuring a volume median diameter Dv50 of the positive active material with a Mastersizer 3000 laser particle size analyzer with reference to the standard GB/T 19077-2016 *Particle Size Analysis-Laser Diffraction Methods.* Dv₅₀ represents a particle diameter measured when a cumulative volume of measured particles reaches 50% of the total volume of all specimen particles in a volume-based particle size distribution.

### 6. Measuring the specific surface area of the positive active material

Measuring the specific surface area of the positive active material powder with reference to the standard GB/T 19587-2004 *Determination of the Specific Surface Area of Solids by Gas Adsorption Using the BET Method.*

### 7. Testing the positive active material with a scanning electron microscope

Observing the morphology of the positive active material powder with a field emission scanning electron microscope (Zeiss Sigma300) with reference to the standard JY/T010-1996. As observed in a scanning electron microscope image, when a powder particle contains only one grain or a single grain accounts for more than half of the volume of the powder particle, the particle is called a monocrystalline particle; when a powder particle contains no more than 10 particles of an equivalent size, the particle is called a quasi-monocrystalline particle; and, when the number of grains in one powder particle exceeds 10, the particle is called a polycrystalline particle.

### Performance Test Results

**Table 4 Performance of batteries prepared in Embodiments 1 to 30 and Comparative Embodiments 1 to 4**

| Serial number | Performance of secondary battery | | | Performance evaluation coefficient E |
|---|---|---|---|---|
| | Discharge gram capacity (mAh/g) | Number of months of full-charge storage under 45 °C (m) | Number of cycles of battery cycled at 45 °C (×10 cls) | |
| Embodi ment 1 | 128 | 27.1 | 98 | 2.22 |
| Embodi ment 2 | 121 | 30.3 | 101 | 2.24 |
| Embodi ment 3 | 112 | 31.9 | 113 | 2.26 |
| Embodi ment 4 | 103 | 32.2 | 119 | 2.15 |
| Embodi ment 5 | 93 | 32.5 | 122 | 1.97 |
| Embodi ment 6 | 120 | 28.5 | 97 | 2.11 |
| Embodi ment 7 | 121 | 27.7 | 96 | 2.09 |
| Embodi ment 8 | 125 | 35.1 | 125 | 2.78 |
| Embodi ment 9 | 125 | 34.7 | 117 | 2.67 |
| Embodi ment 10 | 122 | 31.3 | 110 | 2.40 |
| Embodi ment 11 | 124 | 30.2 | 108 | 2.38 |
| Embodi ment 12 | 117 | 35.6 | 101 | 2.34 |
| Embodi ment 13 | 114 | 37.2 | 103 | 2.35 |
| Embodi ment 14 | 106 | 38.1 | 105 | 2.23 |
| Embodi ment 15 | 94 | 38.9 | 106 | 2.01 |
| Embodi ment 16 | 115 | 36.1 | 103 | 2.34 |
| Embodi ment 17 | 115 | 34.1 | 87 | 2.09 |
| Embodi ment 18 | 118 | 41.8 | 103 | 2.59 |
| Embodi ment 19 | 119 | 42.1 | 111 | 2.71 |
| Embodi ment 20 | 118 | 43.3 | 108 | 2.69 |
| Embodi ment 21 | 116 | 45.7 | 107 | 2.71 |
| Embodi ment 22 | 117 | 37.7 | 112 | 2.54 |
| Embodi ment 23 | 116 | 38.1 | 116 | 2.57 |
| Embodi ment 24 | 112 | 40.3 | 121 | 2.61 |
| Embodi ment 25 | 119 | 36.8 | 103 | 2.44 |
| Embodi ment 26 | 110 | 36.5 | 121 | 2.45 |
| Embodi ment 27 | 94 | 42.1 | 133 | 2.35 |
| Embodi ment 28 | 93 | 43.7 | 142 | 2.45 |
| Embodi ment 29 | 105 | 39.8 | 116 | 2.38 |
| Embodi ment 30 | 105 | 43.2 | 135 | 2.68 |
| Embodi ment 31 | 76 | 56.3 | 159 | 2.40 |
| Compar ative Embodi ment 1 | 118 | 19.2 | 94 | 1.74 |
| Compar ative Embodi ment 2 | 121 | 24.1 | 80 | 1.78 |
| Compar ative Embodi ment 3 | 107 | 18.6 | 81 | 1.42 |
| Compar ative Embodi ment 4 | 127 | 8.6 | 32 | 0.71 |

In contrast to Comparative Embodiment 4, the positive active material in Comparative Embodiments 1 to 3 is doped. The structural stability of the positive active material is improved to some extent. The storage performance and cycle performance of the secondary battery under a high temperature are enhanced to some extent. However, E is obviously less than 2, and much lower than that required in the performance applicability criterion.

In contrast to Comparative Embodiments 1 to 3, the manganese site of the positive active material in Embodiment 1 to Embodiment 31 is doped. The doping element can combine with oxygen to form a polyoxyanion, thereby significantly enhancing the structural stability and thermal stability of the positive active material, and in turn, significantly enhancing the storage performance and cycle performance of the secondary battery.

In contrast to Embodiment 2, different doping elements such as Ru and Ta are used in Embodiments 6 to 11 for doping, and can improve the storage performance and cycle performance of the secondary battery under a high temperature.

In contrast to Embodiment 12, different doping elements such as C, P, Si, and S are used in Embodiments 16 to 20 for doping, and can combine oxygen to form a polyoxyanion, thereby improving the structural stability of the secondary battery, and in turn, enhancing the performance of the secondary battery.

In contrast to Embodiment 12, the doping elements in Embodiments 21 to 31 further include an element X. The element X can reduce the risks of Jahn-Teller distortion of the spinel structure, and in turn, improving the structural stability and capacity characteristics of the positive active material.

As can be seen from Embodiments 1 to 5, the change in the doping amount of the element A affects the performance of the secondary battery to some extent. When falling within the range of 0.001 ≤ a ≤ 0.1, the secondary battery achieves relatively high performance. Especially, when a and b satisfy 0.005 ≤ a + b ≤ 0.1, the storage performance and cycle performance of the secondary battery under a high temperature are more excellent.

As can be seen from Embodiments 12 to 16, the change in the doping amount of the element M affects the performance of the secondary battery to some extent. When falling within the range of 0.001 ≤ b ≤ 0.1, the secondary battery achieves relatively high performance.

**Table 5 Performance of batteries prepared in Embodiments 12 and Embodiments 31 to 40**

| Serial number | Performance of secondary battery | | | Performance evaluation coefficient E |
|---|---|---|---|---|
| | Discharge gram capacity (mAh/g) | Number of months of full-charge storage under 45 °C (m) | Number of cycles of battery cycled at 45 °C (× 10 cls) | |
| Embodiment 12 | 117 | 35.6 | 101 | 2.34 |
| Embodiment 32 | 115 | 36.7 | 105 | 2.38 |
| Embodiment 33 | 115 | 37.2 | 106 | 2.41 |
| Embodiment 34 | 114 | 38.2 | 108 | 2.44 |
| Embodiment 35 | 113 | 39.4 | 110 | 2.48 |
| Embodiment 36 | 111 | 37.9 | 101 | 2.29 |
| Embodiment 37 | 114 | 38.1 | 109 | 2.45 |
| Embodiment 38 | 115 | 37.6 | 107 | 2.43 |
| Embodiment 39 | 115 | 36.2 | 102 | 2.33 |
| Embodiment 40 | 115 | 36.1 | 102 | 2.33 |
| Embodiment 41 | 115 | 35.8 | 101 | 2.31 |

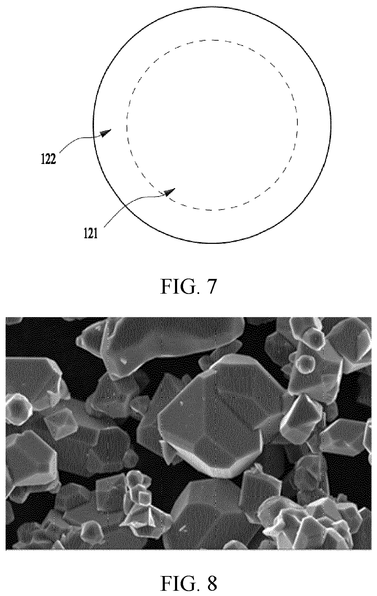

As can be seen from Embodiment 12 and Embodiments 32 to 41 in Table 5, on the basis of keeping m+n constant, the volume percent p is controlled to fall within a specified range. With the decrease in the volume percent p of the second region, a larger amount of element A and element M is richly concentrated in the superficial layer of the positive active material, thereby further enhancing the surface performance of the positive active material and improving the structural stability of the surface of the positive active material. FIG. 7 is a schematic distribution diagram of a first region 121 and a second region 122 of the positive active material.

As can be seen from Embodiments 36 to 41, a higher value of m+n means that a larger amount of element A and element M is richly concentrated at the surface of the positive active material, thereby further increasing the structural stability of the surface of the positive active material.

**Table 6 Performance of batteries prepared in Embodiments 12 and Embodiments 42 to 58**

| Serial number | Performance of secondary battery | | | Performance evaluation coefficient E |
|---|---|---|---|---|
| | Discharge gram capacity (mAh/g) | Number of months of full charge storage under 45 °C (m) | Number of cycles of battery cycled at 45 °C (× 10 cls) | |
| Embodiment 12 | 117 | 35.6 | 101 | 2.34 |
| Embodiment 42 | 124 | 32.2 | 93 | 2.26 |
| Embodiment 43 | 123 | 34.6 | 107 | 2.50 |
| Embodiment 44 | 122 | 36.5 | 116 | 2.65 |
| Embodiment 45 | 121 | 38.2 | 137 | 2.94 |
| Embodiment 46 | 120 | 41.2 | 135 | 2.99 |
| Embodiment 47 | 117 | 41.3 | 132 | 2.89 |
| Embodiment 48 | 113 | 40.7 | 130 | 2.75 |
| Embodiment 49 | 109 | 39.8 | 127 | 2.59 |
| Embodiment 50 | 106 | 36.5 | 110 | 2.24 |
| Embodiment 51 | 119 | 36.9 | 117 | 2.61 |
| Embodiment 52 | 123 | 31.5 | 97 | 2.27 |
| Embodiment 53 | 122 | 34.9 | 106 | 2.48 |
| Embodiment 54 | 117 | 38.6 | 109 | 2.53 |
| Embodiment 55 | 111 | 37.3 | 114 | 2.42 |
| Embodiment 56 | 119 | 47.3 | 149 | 3.34 |
| Embodiment 57 | 122 | 43.6 | 135 | 3.12 |
| Embodiment 58 | 120 | 58.1 | 165 | 3.92 |

As can be seen from Table 6, the performance of the secondary battery can be effectively adjusted by adjusting the particle size, BET specific surface area, and the grain structure of the positive active material. Especially when the parameters satisfy 0.01 ≤ (a + b) × Dv₅₀ ≤ 1, a good trade-off of the electrical performance is achieved so that the electrical performance varies with the doping element and various physical and chemical parameters, thereby effectively avoiding the difficulty of improving one performance indicator at the cost of another, and maximally optimizing the overall performance of the positive active material. Especially in Embodiments 56 to 58, excellent capacity and a long life are achieved by adjusting a plurality of doping elements together with the physical and chemical parameters. FIG. 8 shows a morphology of the positive active material prepared in Embodiment 50.

Although this application has been described with reference to exemplary embodiments, various improvements may be made to the embodiments without departing from the scope of this application, and the components of this application may be replaced with equivalents. Particularly, to the extent that no structural conflict exists, various technical features mentioned in various embodiments may be combined in any manner. This application is not limited to the specific embodiments disclosed herein, but includes all technical solutions falling within the scope of the claims.

## Claims

1. A positive active material, comprising a spinel-type lithium-manganese-containing composite oxide with a molecular formula of Li₁₊ₓAₐM_{b}X_{c}Mn_{2-a-b-c-x}O₄₋ₜ, wherein, in the molecular formula:
A is a doping element for a manganese site of the spinel-type lithium-manganese-containing composite oxide, and A comprises one or more of V, Nb, Ta, Mo, W, Ru, Rh, Sn, Sb, Te, Tl, Pd, Bi, or Po;
M is used for combining with O to form a second phase containing a polyoxyanion, and M comprises one or more of B, C, N, Si, P, S, or Cl;
X comprises one or more of Mg, Al, Si, Ca, Sc, Ti, Cr, Fe, Co, Ni, Cu, Zn, or Zr; and
the molecular formula satisfies: -0.1 ≤ x ≤ 0.3, 0 < a ≤ 0.2, 0 < b ≤ 0.2, 0 ≤ c ≤ 0.7, and 0 ≤ t ≤ 0.2.

2. The positive active material according to claim 1, wherein A comprises one or more of Nb, Ta, Mo, W, Ru, Te, or Tl.

3. The positive active material according to claim 1 or 2, wherein M comprises one or more of Si, S, or Cl.

4. The positive active material according to any one of claims 1 to 3, wherein X comprises one or more of Al, Sc, Cr, Ni, Cu, Zn, or Ti; and/or c satisfies 0.1 ≤ c ≤ 0.6.

5. The positive active material according to any one of claims 1 to 4, wherein
the spinel-type lithium-manganese-containing composite oxide comprises a first region and a second region distributed sequentially from a core of the composite oxide to an outer surface of the composite oxide;
based on a volume of the spinel-type lithium-manganese-containing composite oxide, a volume percent of the second region, denoted as p, is less than or equal to 50%;
based on a total mass of element A in the spinel-type lithium-manganese-containing composite oxide, a weight percent of the element A located in the second region is m;
based on a total mass of element M in the spinel-type lithium-manganese-containing composite oxide, a weight percent of the element M located in the second region is n, satisfying: m + n ≥ 70%; and
optionally 10% ≤ p <_ 30%, and/or 80% ≤ m + n ≤ 95%.

6. The positive active material according to any one of claims 1 to 5, wherein
the molecular formula satisfies 0.001 ≤ a ≤ 0.1 and/or 0.001 ≤ b ≤ 0.1; and
optionally, 0.005 ≤ a + b ≤ 0.1.

7. The positive active material according to any one of claims 1 to 6, wherein
a specific surface area of the spinel lithium-manganese-containing composite oxide is 0.01 m²/g to 1.5 m²/g, and optionally 0.1 m²/g to 1 m²/g.

8. The positive active material according to any one of claims 1 to 7, wherein
an average particle diameter Dv₅₀ of the spinel-type lithium-manganese-containing composite oxide is 1 µm to 20 µm, and optionally 2 µm to 15 µm.

9. The positive active material according to any one of claims 1 to 8, wherein
a and b in the molecular formula and the average particle diameter Dv₅₀ of the spinel-type lithium-manganese-containing composite oxide satisfy: 0.01 ≤ (a + b) × Dv₅₀ ≤ 1.

10. The positive active material according to any one of claims 1 to 9, wherein the spinel-type lithium-manganese-containing composite oxide possesses a monocrystalline particle morphology or a quasi-monocrystalline particle morphology; and/or
a grain shape of the spinel-type lithium-manganese-containing composite oxide is at least one of an octahedron, a truncated octahedron, or a chamfered truncated octahedron.

11. A secondary battery, comprising the positive active material according to any one of claims 1 to 10.

12. A battery module, comprising the secondary battery according to claim 11.

13. A battery pack, comprising the battery module according to claim 12.

14. An electrical device, comprising at least one of the secondary battery according to claim 11, the battery module according to claim 12, or the battery pack according to claim 13.
